# EUROPEAN PATENT SPECIFICATION

(11) **EP 0 283 014 B1**
(45) Date of publication and mention of the grant of the patent: **21.09.1994**
(21) Application number: 88104262.6
(22) Date of filing: 17.03.1988
(51) Int. Cl.: H01J 61/33, H01J 61/72, G02F 1/133

(54) **Flat fluorescent lamp for liquid crystal display**
Flache Leuchtstofflampe für Flüssigkristallanzeige
Lampe fluorescente plane pour dispositif d'affichage à cristal liquide

(30) Priority: 20.03.1987 JP 66614/87
(43) Date of publication of application: 21.09.1988
(73) Proprietor: SANYO ELECTRIC CO., LTD., Moriguchi-shi, Osaka (JP)
(72) Inventor: Hinotani, Katsuhiro, Shijonawate-shi Osaka (JP); Kishimoto, Shunichi, Kaizuka-shi Osaka (JP); Kosaka, Haruhisa, Nara-shi Nara (JP); Terada, Katsumi, Hirakata-shi Osaka (JP); Hamagishi, Goro, Toyonaka-shi Osaka (JP)
(74) Representative: Glawe, Delfs, Moll & Partner

(56) References cited:
- EP-A- 0 077 077
- WO-A-87/04562
- US-A- 2 317 265
- US-A- 3 928 786
- US-A- 4 117 368
- US-A- 4 174 523
- US-A- 4 376 256
- US-A- 4 767 965
- PATENT ABSTRACTS OF JAPAN, vol. 10, no. 289 (E-442)[2345], 2nd October 1986; & JP-A-61 107 651 (MITSUBISHI ELECTRIC CORP.) 26-05-1986
- PATENT ABSTRACTS OF JAPAN, vol. 12, no. 65 (E-586)[2912], 27th February 1988, page 47 E 586; & JP-A-62 208 537 (SANYO ELECTRIC CO., LTD) 12-09-1987

## Description

The present invention relates to a flat fluorescent lamp according to the preamble of claim 1 which is useful as back light for liquid crystal panel for use in liquid crystal TV receivers and liquid crystal displays for word processors or personal computers.

Such a lamp is known from JP-A-6 018 8974.

Liquid crystal panels have the advantages of being lightweight, thin and low in power consumption and are therefore widely used for liquid TV receivers and also for display devices for personal computers, word processors or the like. On the other hand, liquid crystals per se do not luminesce, so that it is necessary to uniformly illuminate the liquid cyrstal panel from behind and render the liquid crystal screen easily visible, hence a need for a back light. For example, Unexamined Japanese Patent Publication SHO 54-90877 and Unexamined Japanese Utility Model Publication SHO 54-111985 disclose flat fluorescent lamps for use as back lights.

In recent years, liquid crystals of larger sizes are in use, including, for example, those of A4 size, and there is a need to use flat fluorescent lamps of increased sizes for such large-sized liquid crystal panels. With the flat fluorescent lamps disclosed in the above publications, however, the glass container, when to be made large-sized, must be prepared from a glass plate of increased thickness in order to preclude implosion due to atmospheric pressure, so that the lamp obtained becomes heavier and has an increased thickness.

To overcome this drawback, the present applicant has already proposed a lamp according to the preamble of claim 1 and of the construction shown in Fig. 19 (Unexamined Japanese Patent Publication SHO JP-A- 60-188974). The lamp includes reinforcing glass members 10 formed integrally with a lower glass plate 8 by press work for supporting an upper glass plate 6 so as to give the lamp increased resistance to pressure without increasing the thickness thereof.

Nevertheless, the proposed construction requires different molds for liquid crystal panels of different sizes and therefore has the problem of being costly.

The present applicant has also accomplished a related invention as illustrated in Fig. 20 and disclosed in Unexamined Japanese Patent Publication SHO 62-208537. The lamp of the invention includes reinforcing glass members 10 adhered to an upper glass plate 6 or a lower glass plate 8 and thereby fixedly provided within the discharge space.

However, when relatively inexpensive soda glass, lead glass, borosilicate glass or the like is used for the reinforcing glass member, the glass member fails to transmit the UV rays 253.7 nm (2537 Å) emitted from mercury by a discharge in the space. Consequently, the fluorescent film coating the inner surface of the upper glass plate does not luminesce at the portions thereof opposed to the reinforcing members to block the light, resulting in lower brightness and producing irregularities in brightness over the luminescent screen.

An object of the present invention is to provide a flat fluorescent lamp which is greatly diminished in brightness irregularities although incorporating reinforcing glass members so as to give a luminescent screen of substantially uniform brightness.

Another object of the invention is to provide an inexpensive flat fluorescent lamp of such a construction that the lamp including reinforcing glass members can be readily fabricated in altered dimensions for use as a back light for a liquid crystal panel of altered size.

These objects are achieved by a lamp as defined in claim 1; the dependent claims are related to further developments of the invention.

One of the features of the flat fluorescent lamp of the present invention is that the inner surface of the upper glass plate thereof, which is coated with a fluorescent film, is not coated with any fluorescent film at the portions thereof opposed to reinforcing glass members so as to assure the upper glass plate of substantially uniform brightness over the entire area thereof including the uncoated portions.

Further the fluorescent lamp of the present invention is characterized in that the upper and lower glass plates thereof are each made of a planar glass plate, and each reinforcing member is fixedly provided in the discharge space by being engaged at its opposite ends with respective discharge electrodes or by being adhered to the lower glass plate. Accordingly, for use with a liquid crystal panel of altered size, the lamp can be readily fabricated in a correspondingly altered size using upper and lower glass plates and side glass wall of altered dimensions and reinforcing glass members of different length without using any glass molding dies.

According to another feature of the invention, the reinforcing member itself is made of a glass having characteristics to transmit UV rays, and the upper glass plate is coated with a fluorescent film over the inner surface thereof defining a discharge space and including the portion thereof opposed to the reinforcing member so as to assure the upper glass plate of substantially uniform brightness over the luminescent panel thereof.
Fig. 1 is an exploded perspective view of a flat fluorescent lamp embodying the invention;
Fig. 2 is a plan view partly broken away and showing the lamp;
Fig. 3 is a view in section taken along the line III-III in Fig. 2;
Fig. 4 is a view in section taken along the line IV-IV in Fig. 2;
Fig. 5 to Fig. 7 are perspective views showing different joints between a discharge electrode and a reinforcing glass member;
Fig. 8 to Fig. 10 are views in section showing different discharge electrodes;
Fig. 11 to Fig. 14 are sectional views showing different embodiments each comprising a reinforcing glass member and upper and lower glass plates;
Fig. 15 is a graph showing the light transmittance characteristics of reinforcing glass members at varying wavelengths, the solid line representing those of the member of soda glass and the broken line those of the member of low iron glass;
Figs. 16 and 17 are sectional views of different embodiments each comprising a reinforcing glass member and upper and lower glass plates;
Fig. 18 is a graph showing the light transmittance characteristics of quartz glass;

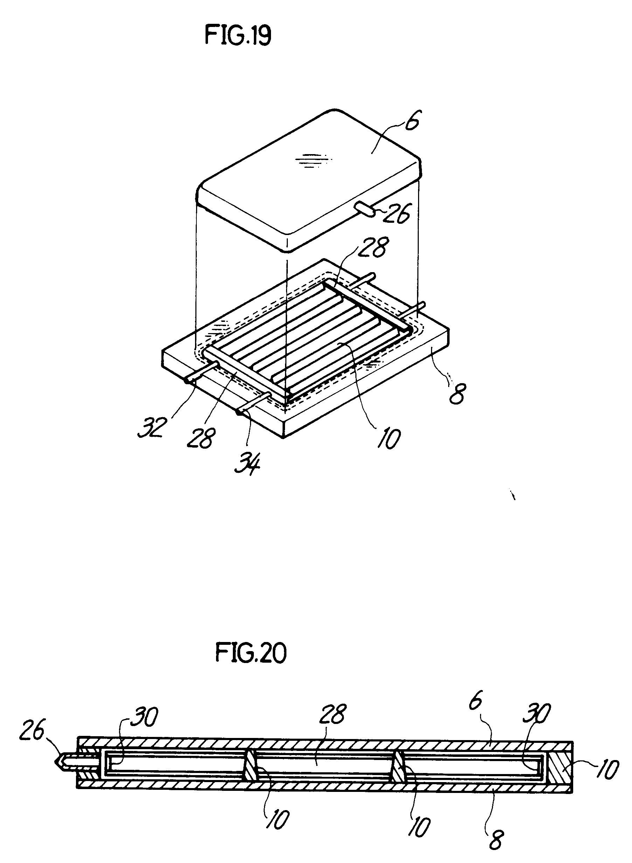

Fig. 19 is a perspective view of a known flat fluorescent lamp; and
Fig. 20 is a sectional view showing a flat fluorescent lamp of the related art.

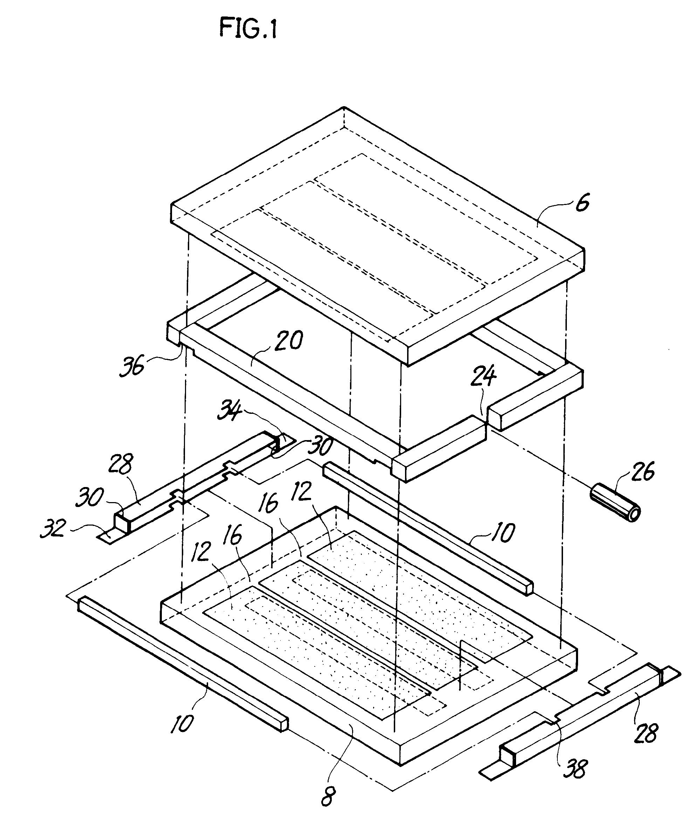

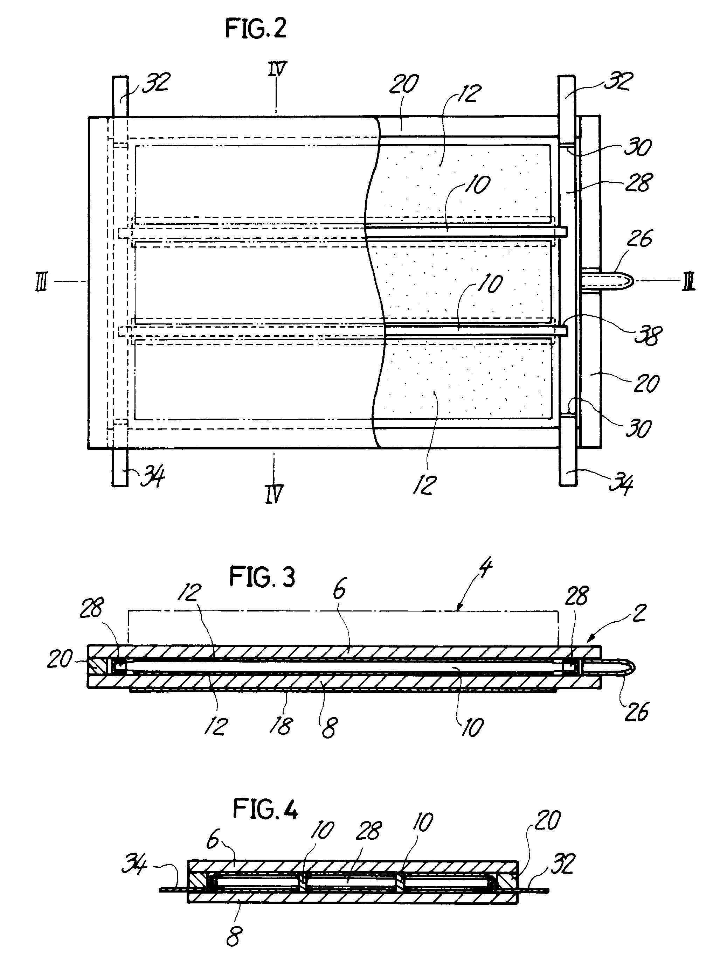

Figs. 1 to 4 show a flat fluorescent lamp 2 embodying the invention and in the form of a thin flat plate approximately of A4 size (278 mm x 192 mm) with a thickness of 3 mm. The lamp has an upper surface providing a luminescent screen and is disposed in intimate contact with the rear side of a liquid crystal panel 4 to serve as a back light for the panel 4. Upper and lower flat glass plates 6 and 8 are coated with a fluorescent film 12 by screen printing over the entire inner surfaces thereof except at their outer peripheral portions and the portions thereof to be opposed to the reinforcing glass members 10 to be described later. At the portions to be exposed to the reinforcing glass members, the glass plates 6, 8 therefore have uncoated areas 14, 16 of exposed glass surface without any fluorescent film. The upper glass plate 6 is rough-surfaced over its upper side.

In corresponding relation to each of the uncoated portions 16, the lower surface of the lower glass plate 8 is provided with a reflecting film 18 made of aluminum foil or the like and having an increased width. Provided between the upper and lower glass plates 6, 8 is a glass side wall 20 which comprises four glass frame members having a small width and arranged along the edges of the plates. Alternatively, the wall 20 is a preformed rectangular frame made by joining such frame members together. The glass side wall 20 is bonded to the peripheral edges of the upper and lower glass plates 6, 8 with frit glass placed between the upper and lower ends of the wall 20 and the glass plates 6, 8 and melted by heating. The hermetic glass tube thus obtained has an interior discharge space 22 which is defined by the upper and lower glass plates 6, 8 and the side wall 20. The glass side wall has a cutout 24, and a tip tube 26 is fitted in the cutout 24 and bonded to the side wall 20 and the plates 6, 8 with frit glass hermetically. The tip tube 26 is in communication with the discharge space. The flat fluorescent lamp is produced by removing air from the interior of the glass tube through the tip tube 26, introducing argon gas and mercury into the discharge space 22 through the tube 26 and sealing off the outer end of the tip tube 26 by fusion.

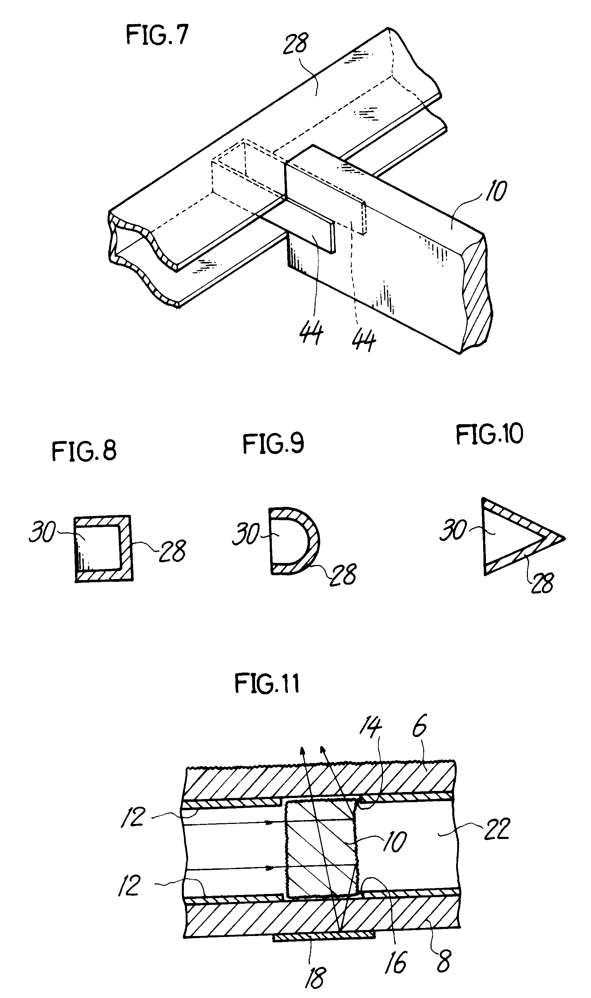

A pair of discharge electrodes 28, 28 are disposed as opposed to each other within the discharge space 22 at both ends thereof. Each of the discharge electrodes 28 is recessed in cross section and is, for example, in the form of a channel (Fig. 8), semicircular (Fig. 9) or V-shaped (Fig. 9) in section. The recessed side is opposed to the other electrode. The electrode 28 is provided at each end thereof with an auxiliary electrode 30 for promoting discharge at the end portion.

L-shaped lead pieces 32, 34 are spot-welded, each at its one end, to the outer side of the respective auxiliary electrodes 30. The other end of each of the lead pieces 32, 34 is fitted in a recessed portion 36 formed in the lower side of the glass side wall 20, and is held between and bonded to the lower glass plate 8 and the side wall 20. The lead piece has its outer end projected outward to provide a current passing terminal and serves the function of fixedly supporting the discharge electrode 28 within the discharge space 22.

A plurality of slender reinforcing glass members 10 having a height approximately equal to the distance between the inner surfaces of the upper and lower glass plates 6, 8 are arranged within the discharge space 22 between the discharge electrodes 28, 28.

Each reinforcing glass member 10 has upper and lower faces in contact with the upper and lower plates 6, 8 to support the glass plates, which are thereby prevented from implosion against atmospheric pressure in spite of a high vacuum of the discharge space 22.

The reinforcing glass members 10 are arranged in coincidence with the uncoated inner surface portions 14, 16 of the upper and lower glass plates 6, 8.

The reinforcing glass members 10 can be fixedly provided in the discharge space by various means. For example, each of the members 10 may be bonded at its lower surface to the uncoated portion 16 of the lower glass plate 8 with frit glass.

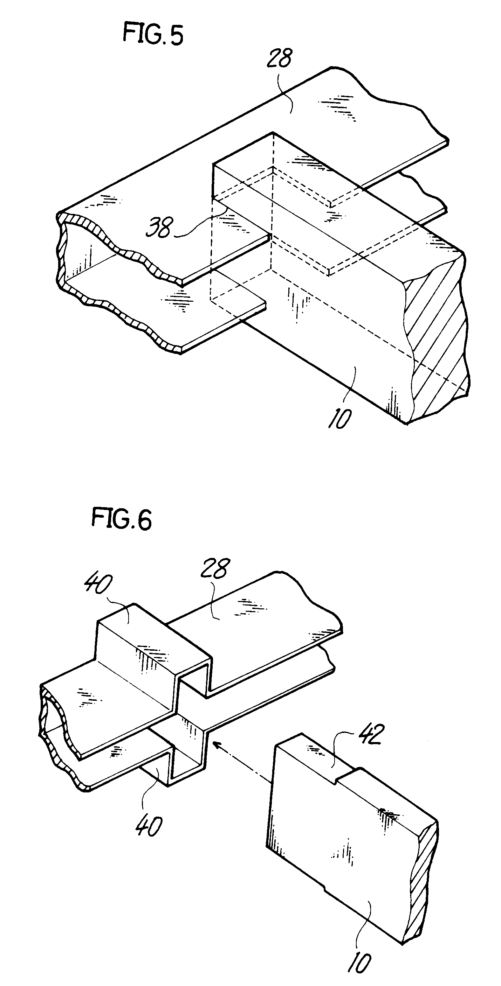

Alternatively, the end of the reinforcing glass member 10 may be fittingly engaged in a cutout 38 formed in the inner side of the discharge electrode as seen in Fig. 5.

As seen in Fig. 6, the discharge electrode 28 is locally enlarged upward and downward as indicated at 40, and stepped portions 42 formed in the end of the reinforcing member are fitted in the enlarged portions.

With reference to Fig. 7, the discharge electrode 28 has a pair of parallel second auxiliary electrodes 44, between which the end of the reinforcing member is clamped in resilient engagement therewith.

The reinforcing glass member 10 is supported by being bonded to the lower glass plate or fitted to the discharge electrodes and need not be bonded to the upper glass plate 6 with frit glass. This eliminates brightness irregularities that could result, for example, from a deposit of frit glass on an undesirable portion.

Fig. 11 is an enlarged view in section showing the reinforcing glass member 10 of the present embodiment. The member 10 is positioned with its upper and lower faces opposed to the uncoated portions 14, 16 of the upper and lower glass plates 6, 8. The reflecting film 18 is provided on the lower surface of the lower glass plate 8 and is positioned in corresponding relation to the uncoated portion 16 of the plate 8. The reinforcing glass member 10 is rough-surfaced with an abrasive 7.9 to 40 µm in particle size.

Accordingly, the light incident on the member 10 and directed upward upon diffused reflection at the side wall is released upward through the upper glass plate 6 at the uncoated portion 14. The light reflected downward is transmitted through the lower glass plate 8 at the uncoated portion 16, directed upward upon reflection at the reflecting film 18 and similarly released upward through the upper glass plate 6.

Consequently, of the light incident on the reinforcing glass member 10, a large amount of light is directed toward the uncoated portions 14, 16 owing to the diffused reflection at the side wall. This greatly diminishes the reduction in brightness or brightness irregularities due to the use of the reinforcing glass member 10.

Furthermore, the upper glass plate 6 is similarly rough-surfaced over its upper side. Accordingly, even if the surface of the upper glass plate 6 has some difference in brightness between the portion thereof opposed to the reinforcing member 10 and the other portion, the boundary between these portions is made less distinct to inhibit brightness irregularities.

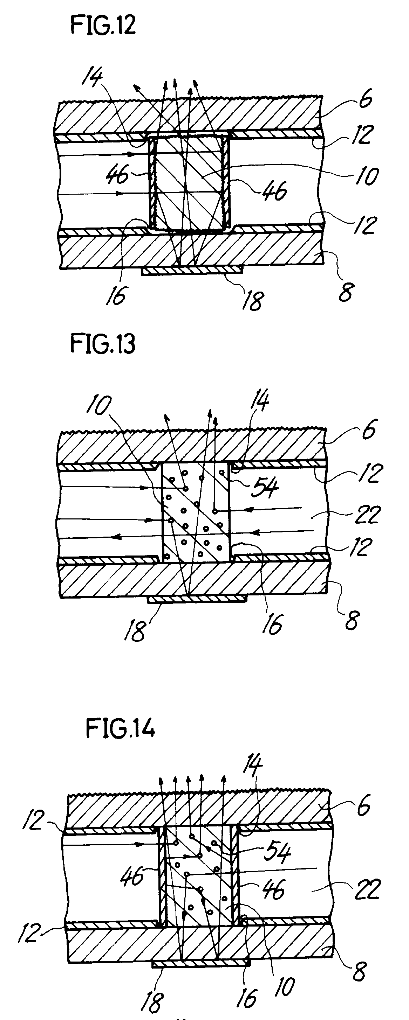

Fig. 12 shows another embodiment of reinforcing glass member 10, which is provided with a fluorescent film 46 on each side face thereof. The member 10 itself therefore luminesces, permitting an increased amount of light to be released outside through the upper glass plate 6 at the uncoated portion 14.

Fig. 13 shows another embodiment of reinforcing glass member 10, which is made of a milky white (translucent) glass material containing many bubbles 54 and termed multifoam glass.

The light incident on the reinforcing glass member 10 is diffusedly reflected upward and downward by the voids. The portion of light directed upward is released outward through the upper glass plate 6 at the uncoated portion 14. The portion of light directed downward is passed through the lower glass plate 8 at the lower uncoated portion 16, directed upward upon reflection at the reflecting film 18 and similarly released outward through the upper glass plate 6.

Since the reinforcing member 10 is made of multifoam glass, the incident light is diffusedly reflected in its interior, permitting an increased amount of light to be directed toward the uncoated portions 14, 16. This greatly diminishes the reduction in brightness or brightness irregularities due to the use of the reinforcing glass member 10.

Fig. 14 shows another embodiment wherein the reinforcing member 10 of Fig. 13 made of multifoam glass is provided with a fluorescent film 46 on each side face thereof. With this embodiment, the reinforcing glass member 10 itself luminesces when exposed to UV rays, permitting an increased amount of light to be released outward through the upper glass plate 6 at the uncoated portion 14.

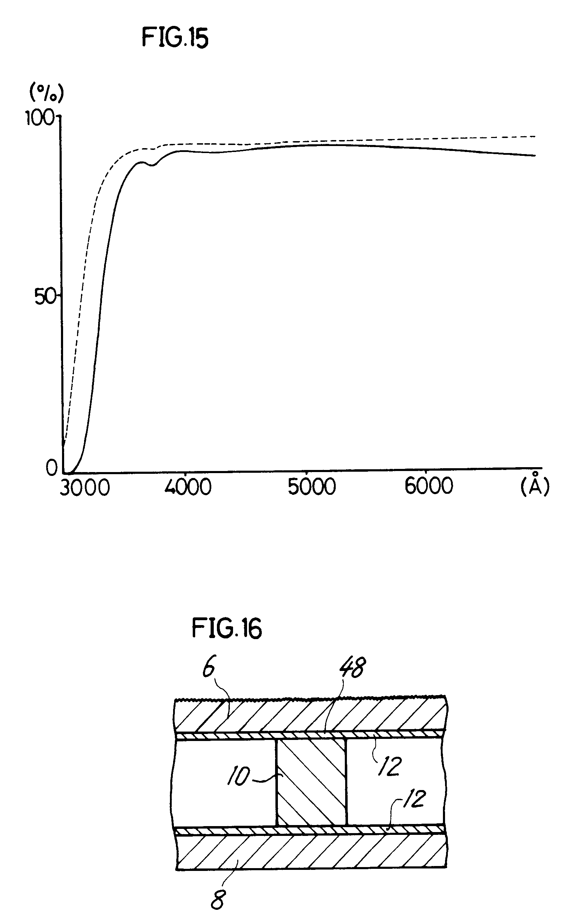

As another embodiment, the reinforcing glass member 10 of Fig. 11 or 12 is made of low iron glass. The low iron glass contains up to about 0.02% of Fe₂O₃ and exhibits in the range of visible rays high transmittance which is at a substantially definite level over this range as represented by a broken line in Fig. 15. Accordingly, this glass transmits light without causing any particular color modulation.

Apparently, the reinforcing glass member can be made of other glasses, such as quartz glass and crystal glass, which are low in Fe₂O₃ content and exhibiting substantially flat transmittance characteristics.

Flat fluorescent lamps are usually prepared using relatively inexpensive soda glass. The solid line in Fig. 15 represents the transmittance characteristics of soda glass. In the range of visible rays 380 to 6800 nm (3800 to 6800 Å), this glass exhibits very high transmittance, which nevertheless is not completely flat or at a definite level, is highest generally for green light 480nm (4800 Å) owing to the presence of at least 0.1% of Fe₂O₃ and is slightly lower at the other wavelengths.

Consequently, at the portion of the luminescent screen of the lamp adjacent to the reinforcing glass member, light is transmitted after traveling through the glass over a longer distance, so that this portion is slightly lower than the other portion in brightness and produces a somewhat greenish color.

The use of the lamp as a back light for liquid crystal color displays therefore involves the problem that the display screen is locally irregular in brightness and exhibits a color modulation to green. However, the glass used for the present embodiment has substantially flat transmittance characteristics over the wavelenghth range of visible rays and therefore permits light to pass through the reinforcing member and the upper glass plate free of color modulation.

Fig. 16 shows another embodiment, wherein the reinforcing member 10 is made of a glass material, such as quartz glass, which has characteristics to transmit the UV rays emitted by the mercury in the discharge space. Each of the upper and lower glass plates is formed with a fluorescent film 48 over the entire inner surface thereof including the portion opposed to the end face of the reinforcing glass member. Thus, there is no uncoated portion, and thus this embodiment is no part of the invention in this respect.

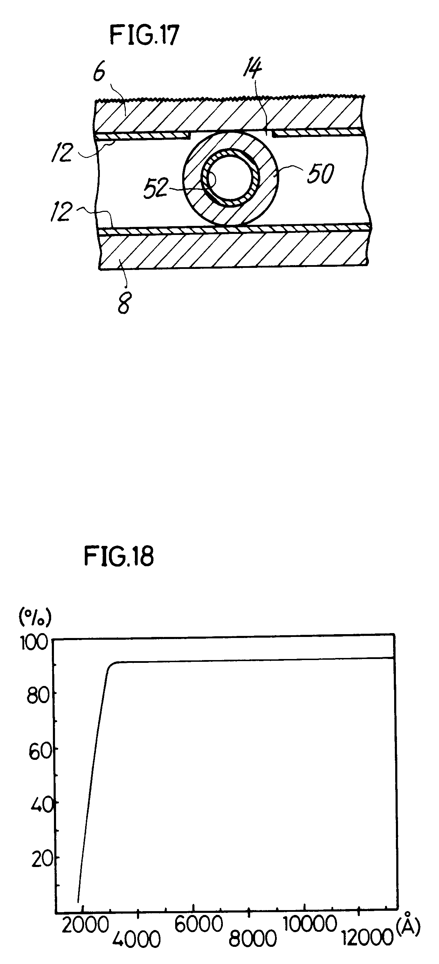

Fig. 18 shows the spectral transmittance curve of the quartz glass used for the reinforcing glass member 10 of the present embodiment. Plotted as abscissa is the wavelength of light vs. the light transmittance as ordinate which is expressed in the percentage of the intensity of light transmitted through the reinforcing glass relative to the intensity of light before transmission.

As illustrated, the quartz glass transmits about 60% of UV radiation 253.7 nm (2537 Å), the resonance line of mercury, for exciting the fluorescent material. Accordingly, the UV rays generated from mercury by a discharge within the glass tube are transmitted through the reinforcing glass member 10 and excite the fluorescent films 48 on the inner surfaces of the upper and lower glass plates at the portions thereof opposed to the reinforcing member 10, causing the portions to luminesce. This eliminates the likelihood that the luminescent screen will exhibit reduced brightness at the portion thereof adjacent to the reinforcing member 10.

Fig. 17 is an enlarged view in section showing another reinforcing glass member 50 embodying the invention. The member 50 is prepared from quartz glass in the form of a pipe internally coated with a fluorescent film 52. The inner surface of the upper glass plate 6, which is coated with a fluorescent film 52, has an uncoated portion 14 having a width approximately equal to the diameter of the reinforcing glass member 50. The member 50 is bonded to the upper and lower glass plates with frit glass.

The UV radiation generated from mercury passes through the reinforcing member 50, exciting the fluorescent film 52 to cause the inner portion of the member 50 to luminesce. The light produced is transmitted through the reinforcing member 50 and released outward through the upper glass plate 6 at the uncoated portion 14. The light emitted by the inner portion of the member 50 passes through the uncoated portion 14 and therefore will not be blocked by the fluorescent film 12. Consequently, the reduction in brightness due to the presence of the reinforcing member 50 can be precluded.

## Claims

1. A flat fuorescent lamp for a liquid crystal panel comprising:
a rectangular lower glass plate (8) coated with a fluorescent film (12) on its inner surface,
a rectangular upper glass plate (6) coated with a fluorescent film (12) on its inner surface and disposed above the lower glass plate (18) in opposed relation thereto,
a glass side wall (20) disposed along the peripheral edges of the upper and lower glass plates and having its upper and lower end faces hermetically joined to the peripheral edges of the glass plates to define a hermetic discharge space (22) between the upper and lower glass plates,
a pair of discharge electrodes (28) arranged in parallel within the discharge space (22) at both ends thereof and opposed to each other, and
reinforcing glass member (10) projecting from or disposed on the lower glass plate (8) positioned between and perpendicular to the electrodes for supporting the upper and lower glass plates, the reinforcing glass member (10) having a height approximately equal to the distance between the upper and lower glass plates, characterized in that
the inner surface of the upper glass plate (6) is formed with an uncoated portion (14) having no fluorescent film at the positon where the upper glass plate (6) is opposed to the reinforcing glass member (10) in contact therewith, and that
the lower glass plate (8) has an uncoated portion (16) without any fluorescent film at the positon where the lower glass plate (8) is opposed to the reinforcing member (10) in contact therewith, the lower glass plate (8) being provided on its outer surface with a reflecting film (18) positioned in corresponding relation to the uncoated portion (16) thereof.

2. A flat fluorescent lamp as defined in claim 1 wherein the upper glass plate (6) is rough-surfaced over its upper side.

3. A flat fluorescent lamp as defined in claim 1 wherein the reinforcing glass member (10) has upper and lower ends and opposite sides which are rough-surfaced.

4. A flat fluorescent lamp as definded in claim 1 wherein the reinforcing glass member (10) is coated with a fluorescent film (46) over each of its opposite side surfaces.

5. A flat fluorescent lamp as defined in claim 1 wherein the reinforcing glass member (10) is made of translucent glass containing a multiplicity of light reflecting fine particles (54).

6. A flat fluorescent lamp as defined in claim 1 wherein the reinforcing glass member (10) is made of multi-foam glass having a milky white color and containing a mulitplicity of fine bubbles.

7. A flat fluorescent lamp as defined in claim 1 wherein the reinforcing glass member (10) is made of a glass having flat transmittance charateristics in the wave-length range of visible rays.

8. A flat fluorescent lamp as defined in claim 1 wherein the reinforcing glass member is made of low iron glass containing up to about 0,02 % of Fe₂O₃.

9. A flat fluorescent lamp as defined in claim 1 wherein the reinforcing glass (10) is in the form of a pipe (50) made of a glass having characteristics to transmit UV rays, and the pipe coated with a fluorescent film (52) over its inner surface.

10. A flat fluorescent lamp as defined in claim 1 wherein the reinforcing glass member (10) is engaged at its opposite ends with the discharge electrodes (28) and thereby supported within the discharge space (22).

## Patentansprüche

1. Flache Fluoreszenzlampe für ein Flüssigkristallfeld mit: einer rechteckigen unteren Glasplatte (8), die mit einem Fluoreszenzfilm (12) an ihrer Innenfläche beschichtet ist, einer rechteckigen oberen Glasplatte (6), die mit einem Fluoreszenzfilm (12) an ihrer Innenfläche versehen ist und der unteren Glasplatte (18) gegenüberliegt,
eine Glasseitenwandung (20), die entlang der Kanten der oberen und der unteren Glasplatte angeordnet ist und deren obere und untere Endflächen hermetisch mit den Umfangskanten der Glasplatten verbunden sind, um einen hermetischen Entladungsraum (22) zwischen der oberen und der unteren Glasplatte zu schaffen,
einem Paar Entladungselektroden (28), die parallel innerhalb des Entladungsraumes (22) an seinen beiden Enden und einander gegenüber angeordnet sind, und
einem Glas-Verstärkungselement (10), das auf der unteren Glasplatte (8) aufliegt oder von ihr vorsteht und zwischen sowie senkrecht zu den Elektroden angeordnet ist, zum Stützen der oberen und der unteren Glasplatte, wobei das Glasverstärkungselement (10) eine Höhe aufweist, die etwa gleich dem Abstand zwischen der oberen und der unteren Glasplatte ist,
dadurch **gekennzeichnet,** daß
die innere Oberfläche der oberen Glasplatte (6) mit einem unbeschichteten Bereich (14) ausgebildet ist, in dem kein Fluoreszenzfilm in den Positionen angeordnet ist, in der die obere Glasplatte (6) dem Glasverstärkungselement (10) gegenüberliegt und in Kontakt damit steht, und
daß die untere Glasplatte (8) einen unbeschichteten Bereich (16) ohne Fluoreszenzfilm in den Positionen aufweist, in denen die untere Glasplatte (8) dem Verstärkungselement (10) gegenüberliegt und damit in Kontakt steht, wobei die untere Glasplatte (8) an ihrer Außenfläche mit einem reflektierenden Film (18) versehen ist, der in entsprechender Beziehung zu ihren unbeschichteten Bereichen (16) angeordnet ist.

2. Flache Fluoreszenzlampe nach Anspruch 1,
wobei die Oberseite der oberen Glasplatte (6) oberflächenaufgerauht ist.

3. Flache Fluoreszenzlampe nach Anspruch 1,
wobei das Glasverstärkungelement (10) ein oberes und ein unteres Ende und gegenüberliegende Seiten aufweist, die oberflächenaufgerauht sind.

4. Flache Fluoreszenzlampe nach Anspruch 1,
wobei das Glasverstärkungselement (10) mit einem Fluoreszenzfilm (46) an jeder seiner gegenüberliegenden Seitenflächen beschichtet ist.

5. Flache Fluoreszenzlampe nach Anspruch 1,
wobei das Glasverstärkungselement aus transluzentem Glas hergestellt ist mit einer Vielzahl lichtreflektierender feiner Partikel (54).

6. Flache Fluoreszenzlampe nach Anspruch 1,
wobei das Glasverstärkungselement (10) aus einem Mehrfachschaumglas hergestellt ist, das eine milchweiße Farbe aufweist und eine Vielzahl feiner Blasen enthält.

7. Flache Fluoreszenzlampe nach Anspruch 1,
wobei das Glasverstärkungselement (10) aus einem Glas hergestellt ist, das eine flache Durchgangscharakteristik im Wellenlängenbereich sichtbarer Strahlen aufweist.

8. Flache Fluoreszenzlampe nach Anspruch 1,
wobei das Glasverstärkungselement aus einem Glas geringen Eisengehaltes hergestellt ist mit bis zu 0,02 % Fe₂O₃.

9. Flache Fluoreszenzlampe nach Anspruch 1,
wobei die Glasverstärkung (10) in Form eines Rohres (50) aus einem Glas hergestellt ist, das UV-Strahlen durchläßt, und wobei das Rohr mit einem Fluoreszenzfilm (52) über seiner Innenfläche beschichtet ist.

10. Flache Fluoreszenzlampe nach Anspruch 1,
wobei das Glasverstärkungselement (10) an seinen gegenüberliegenden Enden mit den Entladungselektroden (28) in Eingriff steht und dadurch innerhalb des Entladungsraumes (22) gestützt ist.

## Revendications

1. Lampe fluorescente plate pour un panneau à cristaux liquides comprenant:
une plaque de verre inférieure rectangulaire (8) revêtue d'une couche fluorescente (12) sur sa surface intérieure, une plaque de verre supérieure rectangulaire (6) revêtue d'une couche fluorescente (12) sur sa surface intérieure et disposée au dessus de la plaque de verre inférieure (18) en relation opposée par rapport à celle-ci,
une paroi de verre latérale (20) disposée le long des bords périphériques desdites plaques de verre supérieure et inférieure et dont les bouts supérieur et inférieur sont joints de façon hérmetique aux bords périphériques desdites plaques de verre, afin de définir un espace (22) hérmetique de décharge entre lesdites plaques de verre supérieure et inférieure,
une paire d'électrodes (28) de décharge disposées en parallèle à l'intérieur de l'espace (22) de décharge aux deux bouts de celui-ci et opposées l'une à l'autre, et un élément (10) de renforcement en verre faisant saillie de ladite plaque de verre inférieure (8) ou disposé sur celle-ci, positionné entre et de façon perpendiculaire aux électrodes pour supporter lesdites plaques de verre supérieure et inférieure, ledit élément (10) de renforcement en verre ayant une hauteur plus ou moins égale à la distance entre lesdites plaques de verre supérieure et inférieure, **caractérisé** en ce que
la surface intérieure de ladite plaque de verre supérieure (6) est formée d'une partie (14) non-revêtue n'ayant pas de couche fluorescente à l'emplacement où la plaque de verre supérieure (6) se trouve opposée à l'élément (10) de renforcement en verre en contact avec celui-ci, et que ladite plaque de verre inférieure (8) a une partie (16) non-revêtue sans aucune couche fluorescente à l'emplacement où ladite plaque de verre inférieure (8) se trouve opposée à l'élément (10) de renforcement en contact avec celui-ci, la plaque de verre inférieure (8) étant pourvue sur sa surface extérieure d'une couche réfléchissante (18) positionée en relation correspondante à la partie (16) non-revêtue de ladite surface extérieure.

2. Lampe fluorescente plate selon la revendication 1, dans laquelle ladite plaque de verre supérieure (6) a une surface rugueuse sur son côté supérieur.

3. Lampe fluorescente plate selon la revendication 1, dans laquelle ledit élement (10) de renforcement en verre a des bouts supérieur et intérieur et des côtés opposés qui ont une surface rugueuse.

4. Lampe fluorescente plate selon la revendication 1, dans laquelle ledit élément (10) de renforcement en verre est recouvert d'une couche fluorescente (46) sur chacune de ses surfaces latérales opposées.

5. Lampe fluorescente plate selon la revendication 1, dans laquelle ledit élement (10) de renforcement en verre est fabriqué de verre translucide contenant une multiplicité de particules fines (54) réfléchissant la lumière.

6. Lampe fluorescente plate selon la revendication 1, dans laquelle ledit élément (10) de renforcement en verre est fabriqué d'un verre à écume multiple d'une couleur blanche laiteuse et contenant une multiplicité de bulles fines.

7. Lampe fluorescente plate selon la revendication 1, dans laquelle ledit élément (10) de renforcement en verre est fabriqué d'un verre ayant une caractéristique de transmittance plate dans la gamme de longueur d'ondes des rayons visibles.

8. Lampe fluorescente plate selon la revendication 1, dans laquelle ledit élément de renforcement en verre est fabriqué d'un verre à bas fer contenant jusqu'à 0,02 % de Fe₂O₃.

9. Lampe fluorescente plate selon la revendication 1, dans laquelle le renforcement en verre (10) est en forme de tuyau (50) fabriqué d'un verre ayant une caractéristique pour transmettre les rayons UV, le tuyau étant revêtu d'une couche fluorescente (52) sur sa surface intérieure.

10. Lampe fluorescente plate selon la revendication 1, dans laquelle ledit élement (10) de renforcement en verre vient s'engager à ces bouts opposés avec lesdites éléctrodes de décharge (28) et de ce fait se trouve supporté à l'intérieur dudit espace de décharge (22).
